(19) **Europäisches Patentamt / European Patent Office / Office européen des brevets**

(11) **EP 4 081 821 B1**

(12) **FASCICULE DE BREVET EUROPEEN**

(45) Date de publication et mention de la délivrance du brevet:
**27.09.2023 Bulletin 2023/39**

(21) Numéro de dépôt: **20851234.3**

(22) Date de dépôt: **24.12.2020**

(51) Classification Internationale des Brevets (IPC):
**G01S 5/02** (2010.01)     **G01S 5/06** (2006.01)
**H04W 56/00** (2009.01)

(52) Classification Coopérative des Brevets (CPC):
**G01S 5/02213; G01S 5/02216; G01S 5/0246; G01S 5/06**

(86) Numéro de dépôt international:
**PCT/FR2020/052625**

(87) Numéro de publication internationale:
**WO 2021/130463 (01.07.2021 Gazette 2021/26)**

(54) **LOCALISATION D'UN ÉMETTEUR AU MOYEN DE PLUSIEURS STATIONS DE RÉCEPTION GÉOGRAPHIQUEMENT DISTANTES EN UTILISANT LES TRAJECTOIRES D'OBJET CONNUS**

ORTUNG EINES SENDERS MITTELS MEHRERER GEOGRAFISCH ENTFERNTER EMPFANGSSTATIONEN MITTELS BEKANNTER OBJEKTPFADE

LOCATING A TRANSMITTER BY MEANS OF A PLURALITY OF GEOGRAPHICALLY REMOTE RECEIVING STATIONS USING KNOWN OBJECT PATHS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2019 FR 1915619**

(43) Date de publication de la demande:
**02.11.2022 Bulletin 2022/44**

(73) Titulaire: **Safran Data Systems**
**91978 Courtaboeuf Cedex (FR)**

(72) Inventeurs:
- **GUILLOT, Baptiste**
  **14680 FRESNEY LE PUCEUX (FR)**
- **PICARD, Yann**
  **14000 CAEN (FR)**

(74) Mandataire: **Regimbeau**
**20, rue de Chazelles**
**75847 Paris Cedex 17 (FR)**

(56) Documents cités:
**EP-A2- 1 701 177        EP-A2- 1 701 177**
**US-A1- 2009 289 851     US-A1- 2009 289 851**

**Description**

DOMAINE TECHNIQUE GENERAL

L'invention concerne le domaine de la localisation d'un objet et plus particulièrement d'un objet émettant des ondes radio fréquences ou un signal.

Plus généralement, l'invention concerne les systèmes dotés d'une pluralité de capteurs et dédiés à la réception, l'analyse et l'exploitation de signaux, utilisant à cet effet la diversité des propriétés d'un même signal tel que perçu en des endroits géographiquement différents.

L'invention concerne plus précisément la synchronisation de stations de réception distantes géographiquement d'un système de localisation d'un émetteur.

ETAT DE LA TECHNIQUE

Pour localiser précisément à distance un objet émettant ou renvoyant un signal, une des principales méthodes utilisées nécessite de mesurer finement l'écart de date de réception d'une même portion de ce signal reçue par plusieurs stations localisées en plusieurs emplacements géographiques. En particulier, la localisation s'effectue en calculant une trajectoire de l'objet en exploitant conjointement ou séparément des mesures de TDOA (en anglais, « *Time Difference of Arrival* ») de FDOA (en anglais, « *Frequency Difference of Arrival* »).

Afin de mesurer les TDOA et FDOA des portions de signaux datées, par chaque station au moyen de sa base de temps locale, sont transmises puis comparées, par exemple par corrélation en temps et fréquence dans une unité de traitement commune afin d'en extraire des écarts temporels et fréquentiels qui sont les TDOA et FDOA. Un autre moyen de mesurer les FDOA et les TDOA consistent par exemple à comparer les temps ou les fréquences de réception d'un élément identifiable du signal et reçu simultanément par chaque station. Les documents EP 1 701 177 A2 et US 2009/189851 A1 décrivent de telles techniques.

Pour avoir des mesures fiables, il est important que les bases de temps locales de chaque station soient toutes synchronisées entre elles.

Pour ce faire, chaque station reçoit des signaux issus d'un ou plusieurs système(s) de positionnement par satellites dit « GNSS » (en anglais, « *Global Navigation Satellite System* ») comme par exemple GPS, Glonass, Galiléo ou Beidu. En effet, ces systèmes GNSS permettent de récupérer un temps universel absolu ainsi qu'une référence de fréquence extrêmement stable, avec lesquels asservir la base de temps locale.

Un problème est que, parfois, l'accès aux systèmes GNSS est brouillé, dégradé voire indisponible (suite à une défaillance ou un acte de malveillance) ce qui conduit à une perte de ce temps universel. Même si les stations sont munies d'horloges locales très stables, elles vont dériver à partir de la perte de GNSS, ce qui aboutira plus ou moins rapidement aboutir à un écart suffisant pour ne plus garantir les précisions de mesures requises.

Ainsi, pour assurer une continuité dans la localisation, une certaine résilience à cette perte est nécessaire car il faut garantir une sûreté de fonctionnement suffisante des systèmes de localisation, notamment quand il s'agit d'applications critiques. Une application critique est par exemple le contrôle des trajectoires de constellations de satellites en orbite basse, afin de répondre aux exigences réglementaires applicables à un opérateur, notamment concernant le risque de collision entre objets spatiaux (risque de conjonction).

Pour être résilient, le système de synchronisation sur système GNSS peut supporter plusieurs constellations (par exemple, GPS, Glonass, Galileo, Beidu, etc.) mais les signaux utilisés sont concentrés dans la même bande de fréquence, induisant une vulnérabilité partagée aux interférences et au brouillage.

Pour pallier la perte du temps universel, on peut prévoir de distribuer à chaque station une base de temps commune via un lien câblé, par exemple de la fibre optique, sur de grandes distances à toutes les stations de réception, chaque base de temps locale utiliserait alors cette base de temps commune.

Toutefois, une telle solution basée sur des moyens propres serait trop onéreuse et l'utilisation de réseaux publics dans lesquels il faut traverser de nombreuses couches de protocoles et matériels variés ne permet pas d'obtenir de bonnes performances, notamment en termes de précision différentielle (gigue de temps importante aux terminaisons).

On peut également imaginer d'asservir les horloges locales sur une base de temps radiodiffusée en BF (basse fréquence), comme le DCF77, mais la précision de ces systèmes est insuffisante pour le besoin.

Aussi, il est nécessaire de disposer d'un autre moyen permettant de recaler précisément entre elles les bases de temps des stations et au minimum de maîtriser leur dérive différentielle.

PRESENTATION DE L'INVENTION

L'invention propose, selon un premier aspect, un procédé de localisation d'un émetteur, mis en oeuvre dans une unité de traitement d'une station de traitement d'un système de localisation comprenant les étapes suivantes :

- réception de signaux acquis par des stations de réception distantes géographiquement, lesdits signaux étant datés par des bases de temps locales de chaque station de réception et correspondent à des signaux issus d'un émetteur à localiser et d'au moins un objet connu ;
- détermination, à partir des signaux datés,

    ∘ des TDOAs mesurés relatifs à l'émetteur à localiser et à l'objet ; et/ou
    ∘ des FDOAs mesurés relatifs à l'émetteur à localiser et à l'objet ;

- détermination, à partir d'éphémérides connues relatives à l'objet et des positions géographiques des stations ;

    ∘ des TDOAs théoriques relatifs à l'objet ; et/ou
    ∘ des FDOAs théoriques ;

- détermination, par différence des TDOAs et/ou FDOAs mesurés et théoriques relatifs à l'objet connu, d'un résidu d'erreur entachant les TDOAs et/ou FDOAs mesurés de manière à ce que chaque station de réception corrige son horloge locale ou que la station de traitement corrige les datations des portions des signaux issus de chaque station de réception.

    - détermination de la localisation de l'émetteur (3) utilisant des TDOAs et/ou FDOAs mesurés une fois que les stations de réception ont corrigé leur base de temps locale ou que la station de traitement a corrigé les datations des portions des signaux issus de chaque station de réception.

Selon un deuxième aspect, l'invention propose une station de traitement d'un système de localisation d'un émetteur à localiser, comprenant une unité de traitement configurée pour mettre en oeuvre un procédé selon le premier aspect de l'invention, et au moins deux stations de réception chacune comprenant:

- une horloge locale configurée pour fournir une base de temps locale ;
- un premier récepteur configuré pour acquérir des signaux issus d'un objet à localiser ;
- ledit premier récepteur étant en outre configuré pour acquérir des signaux issus d'un objet céleste ou artificiel dont le comportement est prédictible ou connu, lesdits signaux acquis étant datés par la base de temps locale.

L'invention propose selon un troisième aspect, un produit programme d'ordinateur comprenant des instructions de codes pour mettre en oeuvre un procédé de localisation le premier aspect de l'invention, lorsque celui-ci est exécuté par un ordinateur.

D'autres aspects de l'invention sont définis dans les revendications dépendantes.

Le principe de l'invention consiste donc à recaler entre elles les bases de temps de plusieurs stations de réception en recevant par des moyens radiofréquences le signal émis par des objets célestes naturels ou artificiels qui sont en visibilité commune et dont le déplacement est connu ou prédictible d'une manière indépendante des constellations GNSS. En particulier, il peut s'agir d'objets célestes artificiels dont la trajectoire est estimée par le système lui-même. On désigne ici ces objets par l'expression « objets connus ».

Pour ce faire, des stations de réception distantes sont munies d'une base de temps locale qui fournit une date en comptant les tics d'un signal d'horloge oscillant de fréquence très stable.

Elles collectent, via leur antenne et dispositifs radiofréquence, le signal d'émetteurs à localiser, le signal GNSS lorsqu'il est disponible, et le signal d'autres objets connus qui sont en visibilité commune depuis au moins deux stations de réception, de préférence trois stations pour une meilleure précision. Après conversion cohérente et échantillonnage synchrone du signal de la cible à localiser et du signal issu de la source de référence temporelle et fréquentielle, des séquences d'échantillons de signal numérisé sont datés par la base de temps locale.

Les stations de réception communiquent avec une unité de traitement qui peut être éventuellement co-localisée avec l'une des stations de réception. Elles lui envoient ces séquences de signal datées pour les émetteurs suivis (ceux à localiser) ainsi que les objets de référence. S'il y a recouvrement temporel et fréquentiel suffisant entre les séquences, l'unité de traitement peut alors chercher l'écart de temps et fréquence fournissant la corrélation maximale des signaux issus d'un même objet ou émetteur pour chaque paire de stations. Ces écarts de temps et de fréquence (TDOA et FDOA) sont donc calculés dans les bases de temps locales respectives de chacune des stations de réception. Lorsqu'on connait l'éphéméride, selon la mécanique céleste, d'un objet connu dans une base de temps absolue (ou sinon celle de la station de traitement) alors l'unité de traitement en calcule également les TDOA (et le cas échéant les FDOA) théoriques pour la même paire de stations.

Lorsque les bases de temps de la paire de stations sont parfaitement alignées et calibrées, qu'elles sont asservies au temps absolu, alors les TDOA et FDOA théoriques et mesurés doivent coïncider, aux erreurs irréductibles près. Parmi elles, on compte le bruit thermique de réception et la gigue d'horloge court terme qui sont statistiquement nuls et ne jouent qu'à court terme.

A moyen ou long terme, le résidu d'erreur de TDOA/FDOA, c'est-à-dire l'écart entre les valeurs mesurées et théoriques, lorsqu'il n'est pas nul, est constitué par les contributions et biais suivants :

- dérive de la base de temps locale ;
- biais entre la datation (timestamp) et la base de temps locale ;
- dispersion de propagation atmosphérique et ionosphérique.

Lorsqu'on peut considérer que ces biais sont inhérents à chaque station, indépendamment de l'objet reçu, le résidu d'erreur entre TDOA/FDOA mesurés et théoriques fournit donc une estimation de la différence de ces biais entre chaque couple de stations, et ce quel que soit l'objet de référence dont l'éphéméride est connue. L'unité de traitement calcule donc ces valeurs dans des phases d'étalonnage régulières.

Si on dispose de plusieurs objets connus dont on connaît les éphémérides, alors l'estimation en devient plus précise. En revanche, pour un objet à localiser dont on ne connaît pas l'éphéméride, on peut alors appliquer la correction associée à cette estimation d'écart de datation, c'est-à-dire retrancher le résidu puisqu'il est unique et la mesure de TDOA/FDOA corrigée coïncide alors forcément avec le calcul théorique, c'est-à-dire l'éphéméride que l'on peut alors extraire.

Quand on perd le signal GNSS, alors les bases de temps de chaque station de réception dérivent lentement avec un écart de date qui reste suffisamment faible pendant plusieurs jours pour pouvoir exploiter correctement des éphémérides exprimées dans une base de temps absolue. On collecte le signal d'objets connus, c'est à dire dont les éphémérides sont prédictibles par la mécanique céleste comme des astres ou des satellites géostationnaires qui ne subissent pas de manoeuvre, et on s'en sert de façon à continuer à corriger les écarts de datation entre les bases de temps des stations de réception.

Afin de garantir une bonne sûreté de fonctionnement, le système est programmé pour collecter séquentiellement plusieurs objets connus. On vérifie alors que tous les objets fournissent un jeu de correction de différence de date cohérent. Si certains objets fournissent des corrections aberrantes, il faut alors les écarter (temporairement) de la liste des références. Dans le cas d'un satellite géostationnaire, cela signifiera notamment qu'il a subi une manoeuvre entre temps.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre un système de localisation selon l'invention
- la figure 2 illustre une station de réception d'un système de localisation selon l'invention ;
- la figure 3 illustre un procédé de localisation selon l'invention.

Sur l'ensemble des figures les éléments similaires portent des références identiques.

## DESCRIPTION DETAILLEE

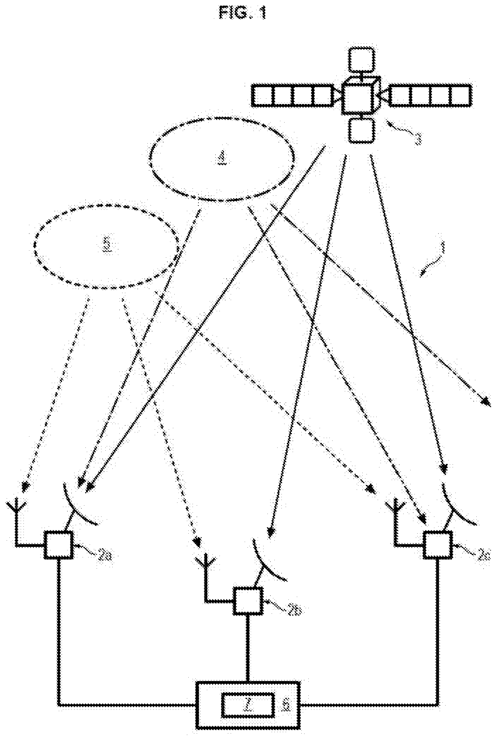

En relation avec la **figure 1,** un système de localisation 1 d'un émetteur 3 d'un signal radio fréquence comprend au moins deux stations de réception 2a, 2b, 2c.

Les stations de réception 2a, 2b, 2c sont géographiquement distantes, distinctes et éloignées et sont en liaison avec une station de traitement 6 qui permet de traiter les signaux issus de ces stations de réception 2a, 2b, 2c pour déterminer des décalages temporels et des décalage fréquentiels d'un même signal reçu par chacune de ces stations et pour, à partir de ces décalages en déduire une trajectoire de l'émetteur 3 et donc sa localisation. Ces décalages temporels et fréquentiels sont les TDOA et FDOA présentés en introduction. La station de traitement 6, est sur la figure 1, distincte des stations de réception mais dans une réalisation particulière, une des stations de réception peut aussi être la station de traitement.

L'émetteur 3 à localiser est par exemple un satellite mais il peut s'agir de n'importe quel objet pourvu qu'il émette un signal radiofréquence pouvant être reçu par au moins deux stations de réception.

Sur la figure 1, trois stations sont représentées, deux stations peuvent suffirent mais plus le nombre de stations est important meilleure la précision des calculs sera.

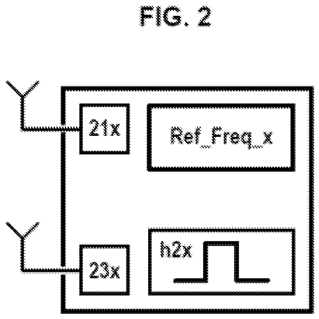

En relation avec la **figure 2,** chaque station de réception 2x (x=a ou b ou c) comprend un premier récepteur 21x configuré pour acquérir des signaux issus de l'émetteur 3 à localiser et un deuxième récepteur 23x configuré pour acquérir des signaux issus d'un ou plusieurs satellite(s) d'une ou plusieurs constellations 5 GNSS.

En outre, le premier récepteur 21x est configuré pour acquérir des signaux issus de l'objet connu 4. En effet, Le traitement de l'objet connu servant à évaluer les paramètres caractéristiques des imperfections inhérentes aux stations de réception et dégradant la précision de localisation de l'émetteur 3, il est par conséquent essentiel que le processus de réception des signaux en provenance de l'objet connu 4 subisse les mêmes dégradations et ne passe pas par une chaîne de réception dédiée.

Les signaux issus des objets célestes naturels ou artificiels permettent de pallier l'absence du signal GNSS comme on va le voir dans ce qui suit.

Ces objets célestes ou artificiels sont par exemples des astres ou alors des satellites géostationnaires. On emploie dans la description qui suit l'expression « objet connu » pour désigner ces objets. Ces objets connus présentent l'intérêt que leurs éphémérides sont bien connues et que l'on peut donc calculer leur trajectoire de manière fiable et prédire des TDOAs et/ou FDOAs théoriques. En effet, comme les TDOA et FDOA sont prévisibles il est possible en comparant des valeurs calculées à partir des mesures et des valeurs issues des prédictions d'évaluer d'éventuelles erreurs dans les calculs des TDOA et/ou FDOA de l'émetteur à localiser.

En outre, on précise qu'un signal émis par un corps céleste rayonnant, est un bruit lié à sa température équivalente qui est donc détectable si sa température est relativement élevée par rapport au rayonnement cosmique à 3 Kelvins (Soleil, lune, quasar, etc.). Les stations terrestres étant relativement proches, comparativement à leur distance à ces corps célestes, elles voient ce corps céleste selon un angle quasi identique et donc reçoivent le même bruit thermique, mais à des instants légèrement décalés de par la différence d'éloignement des stations entre elles.

Dès lors, la corrélation des deux signaux sera maximale lorsqu'on aura réaligné ces deux signaux : la fonction d'autocorrélation d'un bruit blanc large bande est bien une impulsion de « Dirac » à l'instant 0. Ainsi, on comprend qu'un bruit a des propriétés de corrélation (la transformée de Fourrier de la fonction d'autocorrélation d'un bruit donne par définition son spectre).

En revenant à la figure 2, chaque station de réception 2a, 2b, 2c comprend en outre une horloge locale h2x configurée pour fournir une base de temps locale tlocal2x. En outre, les récepteurs 21x, 23x sont cadencés par cette horloge. On entend par horloge locale, un oscillateur fournissant un signal de fréquence stable qui permet sur ses fronts montants ou descendants de déclencher et de cadencer l'échantillonnage des acquisitions par chaque récepteur. Par ailleurs, le comptage des fronts de l'horloge fournit une datation commune des échantillons de chaque acquisition.

Lorsque le signal GNSS est disponible, la base de temps locale est synchronisée sur une base de temps absolue issue de la démodulation du signal GNSS. A ce titre, le deuxième récepteur 23x est configuré pour acquérir des signaux issus d'un système de positionnement par satellites 5, est en outre configuré pour démoduler les signaux acquis pour en extraire une base de temps absolue afin de corriger chaque base de temps locale de chaque station de réception.

Ainsi, les stations de réception 2x sont synchronisées entre elles au moyen du signal issu du système de positionnement par satellites en utilisant cette base de temps absolue. On note que lorsque le signal GNSS n'est pas disponible, la base de temps locale qui n'est plus asservie sur le temps absolu va dériver faiblement mais indépendamment pour toutes les stations de réception de sorte que l'écart de synchronisation augmente avec le temps.

Chaque station de réception 2a, 2b, 2c comprend également une antenne A1x, de réception connectée à chaque récepteur 21x, 23x. En outre, les stations de réception comprennent chacune une interface de communication (non représentée) pour communiquer avec la station de traitement 6.

Pour ce qui est de l'acquisition, chaque récepteur est constitué d'une de réception radio fréquence classique. Cette chaîne de réception inclut un convertisseur de fréquence asservi sur la référence de fréquence, une chaîne de numérisation multi-canaux dérivant d'un convertisseur analogique numérique asservi sur la référence de fréquence. Cette chaîne de réception bien connue de l'homme du métier ne sera pas plus décrite ici.

On se place ici dans le cas où le signal GNSS n'est pas disponible de sorte que la base de temps locale n'est plus fiable et fournit une date erronée, qui dérive lentement dès lors que le signal GNSS devient indisponible.

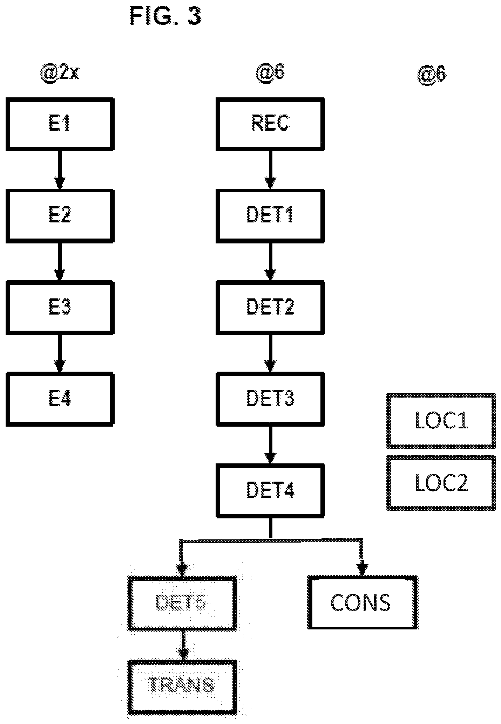

Dans ce contexte particulier, un procédé de localisation d'un émetteur 3 est décrit ci-après en relation avec la **figure 3.** Un tel procédé est mis en oeuvre dans une unité de traitement 7 de la station de traitement 6.

Au moins deux stations de réception 2a, 2b, 2c procèdent à l'acquisition (étape E1) et à la datation (en anglais, « *timestamping* », étape E2) des portions de signaux issus de l'émetteur 3 à localiser et d'au moins un objet connu 4. En particulier, on obtient pour l'émetteur un signal Semetteur_x et pour l'objet un signal Sobjet_x. Ces signaux sont datés grâce à la base de temps locale de chaque station de réception 2a, 2b, 2c.

Ces signaux sont transmis (étape E3) à la station de traitement 6 qui va après réception de ces signaux (étape REC) par exemple corréler deux à deux les signaux issus de plusieurs stations afin de pouvoir comparer des portions identiques de signaux pour en déduire les TDOAij et/ou FDOAij c'est-à-dire des écarts temporels et fréquentiels de portions de signaux identiques (les indices i et j désignent les stations a, b, c) déterminés pour deux stations i,j.

Un des objectifs attendus par l'utilisation d'un objet d'éphéméride connu est de pouvoir corriger les bases de temps locales des stations de réception, dès lors les TDOA de l'objet connu sont utilisés ou bien les FDOAs de l'objet connu

Pour ce qui est du TDOAij c'est exactement la différence de temps de propagation mis par des portions identiques du signal de l'émetteur 3 pour atteindre la station i et pour atteindre la station j. Bien entendu ces écarts temporels sont mesurés par rapport aux bases de temps locales qui sont imprécises compte tenu de l'absence du signal GNSS.

Ainsi, à partir des datations des signaux reçus issus d'au moins deux stations de réception 2a, 2b, 2c la station de traitement détermine (étape DET1) des écarts temporels mesurés $TDOA\_objet\_{ij}^{MES}$, $TDOA\_emetteur_{ij}^{MES}$ correspondant aux signaux reçus relatifs à l'émetteur à localiser et à l'objet (ou les objets) connu(s). Bien entendu, des traitements similaires sont possibles à partir des FDOAs.

Ensuite, à partir d'éphémérides connues et déterminés dans une base de temps absolu relatives à au moins un objet connu, des écarts temporels et/ou fréquentiels théoriques $TDOA\_objet\_{ij}^{TH}$, $FDOA\_objet\_{ij}^{TH}$ relatifs à l'objet connu sont déterminés (DET2).

En procédant à la différence des écarts mesurés avec les valeurs théoriques, on détermine (étape DET3) une erreur temporelle $RES\_TDOA_{ij}$ (ou résidu de TDOA) entachant les TDOAs et qui permet de corriger (étape E4) les bases de temps des stations de réception. De manière similaire une erreur fréquentielle (ou résidu de FDOA) pourrait être calculée sur les bases des valeurs de FDOA mesurées et des valeurs théoriques.

Selon un mode de réalisation, à partir des résidus d'erreurs entachant les TDOAs et/ou FDOAs mesurés des données de correction des bases de temps locales sont déterminées (étape DET5).

Puis, ces données de corrections sont transmises à chaque station de réception (étape TRANS) qui recale la date de son horloge locale.

Selon un mode de réalisation, la station de traitement conserve le résidu et effectue les corrections de datation des portions de signal reçus de chaque station (étape CONS).

Enfin la localisation (étape LOC1) de l'émetteur 3 utilisant des TDOAs et/ou FDOAs mesurés une fois que les stations de réception ont corrigé leur base de temps locale est effectuée.

S'agissant des TDOA, on a l'expression suivante

$$TDOA\_objet\_{ij}^{MES} = TDOA_{ij}^{réel} + CorrNoise + \Delta_{ErrGNSS}^{ij} + \Delta_{ErrTshort}^{ij} + \Delta_{BiasCal}$$

Avec

- $TDOA_{ij}^{Réel}$ : la valeur physique réelle, celle recherchée (celle qu'on cherche à mesurer) ;
- CorrNoise : le bruit de corrélation, typiquement AWGN (en anglais, « *Additive White Gaussian Noise* » et en français bruit additif blanc gaussien) (qui est blanc, Gaussien, de moyenne nulle et d'énergie prédictible et déterminée par le canal) ;
- $\Delta_{BiasCal}$ : l'erreur induite par les biais du dispositif physique de la station et qui peut être calibrés (temps de propagation dans les équipements, incertitude sur la position géographique réelle des récepteurs). Ils sont considérés très stables à l'échelle de plusieurs semaines et sont donc considérés comme connus car estimé par un processus d'étalonnage ;
- $\Delta_{ErrGNSS}^{ij}$ : la différence d'erreur de datation obtenue par l'exploitation du signal GNSS (typiquement faible, de type plutôt AWGN)
- $\Delta_{ErrTshort}^{ij}$ : la différence d'erreur de datation court-terme (celle qui n'est pas compensé par le processus de correction GPS, donc la gigue à court terme des horloges).

Lorsque l'objet connu est suivi par les stations de réception (régime nominal) sa position et donc les valeurs de $TDOA_{ij}^{Réel}$ sont connues à l'erreur $ERR\_PROPAG\_TDOA_{ij}$ près du propagateur qui lui permet de calculer la valeur théorique $TDOA_{ij}^{TH}$. En éliminant les termes supposés connus, on définit donc le résidu de TDOA par :
$RES\_TDOA_{ij} = TDOA_{ij}^{Mes} - TDOA_{ij}^{TH} = ERR\_PROPAG\_TDOA_{ij} + CorrNoise + \Delta_{ErrGNSS}^{ij} + \Delta_{ErrTshort}^{ij}$ (Ici, on a considéré que $\Delta_{BiasCal}$ est connu et a été retiré).

La plupart de ces termes sont d'une intensité négligeable par à rapport à la dérive que nous cherchons à estimer et relèvent du bruit qu'on pourra approcher par un bruit faible de moyenne nulle. Une fois que les stations sont en mode nominal (phases de mise en route terminées, base de temps asservie une première fois sur le GNSS, puis asservissement suivi sur le GNSS, etc.) la dérive de $REF\_FREQ_i$ (et donc le terme $\Delta_{ErrTshort}^{ij}$) et de la base de temps associé ne dépend que des caractéristiques de REF_FREQ, en mode non asservi. Ses caractéristiques sont choisies pour être de très bonne qualité. En mode nominal (à savoir lorsque la synchronisation temporelle exploitant les constellations GNSS est opérationnelle), le suivi d'un objet connu permet donc d'estimer l'erreur de datation court-terme (induite par la gigue court-terme des horloges locales) du système qui peut être utilisé pour corriger également les horloges locales des stations de réception. Dans une implantation de l'invention, les boucles de traitement exploitant les objets connus sont actives et exploitées même lorsque le synchronisation GNSS est active et fonctionnelle. Ces boucles sont alors exploitées uniquement afin de corriger les gigue court-terme des horloges locales.

Dans le cas où la synchronisation GNSS n'est plus possible, l'invention compense à la fois les dérives moyen-terme et court-terme des horloges locales.

Comme décrit, l'obtention de l'erreur temporelle repose sur le suivi d'un objet connu. La fiabilité des mesures le concernant est donc critique.

En effet, lorsqu'il s'agit de satellites géostationnaires, ces derniers peuvent être dans des phases de manoeuvre de sorte que leurs trajectoires ne sont pas prédictibles sur la base des éphémérides. Le procédé de localisation de l'émetteur à localiser suppose au préalable (et éventuellement simultanément) la localisation des objets artificiels de référence (étape LOC2).

Dès lors, le procédé de localisation comprend une étape de détermination (étape DET4) à partir des TDOAs et/ou FDOAs mesurés relatifs à l'objet connu, d'un indicateur de fiabilité des écarts temporels mesurés, ledit indicateur de fiabilité ayant pour but de déterminer si les éphémérides de l'objet connu exploitable pour la correction d'horloge locale. Cet indicateur de fiabilité permet notamment de déterminer si l'objet connu est en cours de manoeuvre ou pas.

Bien entendu l'objet connu, lorsqu'il s'agit d'objets célestes (par exemple le soleil) n'est pas concerné par ces notions de fiabilité. En effet, ces objets connus célestes sont répertoriés et facilement identifiables et des éphémérides extrêmement précises sont disponibles.

Cependant, les objets naturels répertoriés peuvent n'être pas en visibilité permanente (par exemple si on utilise le soleil comme objet connu, sa visibilité est bien entendu soumis aux alternances jour / nuit) pour les mesures de recalage de haute fiabilité (non dépendant de l'erreur de propagation) et l'exploitation des objets artificiels (par exemple géostationnaire) en visibilité constante peut systématiquement être utilisée en recalage relatif (sujet à l'erreur de propagation) dans les phases d'invisibilité des objets naturels.

En outre, et avantageusement, la fiabilité des mesures issues des objets connus consiste à comparer plusieurs résidus de TDOAs obtenus sur plusieurs objets connus mais différents pour vérifier l'alignement de ces résidus temporels entre eux puisqu'ils ne sont pas censés dépendre de l'objet connu. Si certains de ces objets divergent trop des autres alors on peut en déduire que leur éphéméride n'est pas fiable et on peut alors écarter l'objet de la liste des objets de références utilisables pour maintenir la synchronisation entre les stations.

## Revendications

1. Procédé de localisation d'un émetteur (3), mis en oeuvre dans une unité (7) de traitement d'une station (6) de traitement d'un système (1) de localisation comprenant les étapes suivantes :

   - réception (REC) de signaux acquis (E1) par des stations (2a, 2b, 2c) de réception distantes géographiquement, lesdits signaux étant datés (E2) par des bases de temps locales de chaque station (2a, 2b, 2c) de réception et correspondent à des signaux issus d'un émetteur (3) à localiser et d'au moins un objet (4) connu ;
   - détermination (DET1), à partir des signaux datés, des TDOAs mesurés (TDOA_objet$_{ij}$$^{MES}$, TDOA_emetteur$_{ij}$$^{MES}$) relatifs à l'émetteur (3) à localiser et à l'objet ; et/ou des FDOAs mesurés (FDOA_objet$_{ij}$$^{MES}$, FDOA_emetteur$_{ij}$$^{MES}$) relatifs à l'émetteur (3) à localiser et à l'objet (4) connu ;
   détermination (DET2), à partir d'éphémérides connues relatives à l'objet connu et des positions géographiques des stations ; des TDOAs théoriques (TDOA_objet$_{\_ij}$$^{TH}$) relatifs à l'objet (4) connu ; et/ou des FDOAs théoriques (FDOA_objet$_{\_ij}$$^{TH}$) ;
   - détermination (DET3), par différence des TDOAs et/ou FDOAs mesurés et théoriques relatifs à l'objet connu, d'un résidu d'erreur entachant les TDOAs et/ou FDOAs mesurés de manière à ce que chaque station de réception corrige son horloge locale ou que la station de traitement corrige les datations des portions des signaux issus de chaque station de réception (2a, 2b, 2c) ;
   - détermination de la localisation (LOC1) de l'émetteur (3) utilisant des TDOAs et/ou FDOAs mesurés une fois que les stations de réception ont corrigé leur base de temps locale ou que la station de traitement a corrigé les datations des portions des signaux issus de chaque station de réception (2a, 2b, 2c).

2. Procédé selon la revendication 1, comprenant une étape de détermination (DET4) à partir des TDOAs et/ou FDOAs mesurés relatifs à plusieurs objets, d'un indicateur de fiabilité desdits écarts temporels ou fréquentiels mesurés, ledit indicateur de fiabilité permettant de déterminer si les éphémérides de l'objet connu sont exploitables pour la correction d'horloge locale et pour, notamment, déterminer si l'objet connu est en cours de manoeuvre.

3. Procédé selon l'une des revendications précédentes, comprenant une étape de détermination (DET5), à partir des résidus entachant les TDOAs et/ou FDOAs mesurés des données de correction des bases de temps locales et une étape de transmission (TRANS) à chaque station de réception (2a, 2b, 2c) des donnés de correction des bases de temps locales déterminées de manière à ce que chaque station de réception corrige son horloge locale.

4. Procédé selon l'une des revendications 1 à 2, comprenant une étape de conservation (CONS) des données de corrections des bases de temps locales déterminées de manière à ce que la station de traitement corrige les datations des portions des signaux reçus de chaque station de réception (2a, 2b, 2c).

5. Procédé selon l'une des revendications précédentes, comprenant une étape de détermination de la localisation (LOC2) de l'objet connu ou des objets connu(s) (4) sur la base de mesures effectuées par les stations (2a, 2b, 2c).

6. Procédé selon la revendication 4 prise en combinaison avec la revendication 2, dans lequel la localisation (LOC2) est utilisée pour déterminer l'indicateur de fiabilité.

7. Procédé selon l'une des revendications 2 à 4, dans lequel ladite détermination (DET4) consiste à comparer plusieurs TDOAs et/ou FDOAs mesurés sur plusieurs objets connus mais différents pour vérifier la cohérence des résidus entre eux et déterminer l'ensemble des objets exploitables pour la correction d'horloge locale.

8. Procédé selon l'une des revendications précédentes, dans lequel les stations (2a, 2b, 2c) de réception sont synchronisées entre elles au moyen d'un signal provenant d'un système de positionnement par satellites, de préférence, de façon intermittente.

9. Système (1) de localisation d'un émetteur (3) à localiser, ledit système (1) de localisation comprenant une station de traitement comprenant une unité de traitement (7) configurée pour mettre en oeuvre un procédé selon l'une des revendications précédentes, et au moins deux stations de réception (2a, 2b, 2c) chacune comprenant :

  - une horloge locale (h2a, h2b, h2c) configurée pour fournir une base de temps locale (tlocal2a, tlocal2b, tlocal2c) ;
  - un premier récepteur (21a, 21b, 21c) configuré pour acquérir des signaux issus d'un objet (3) à localiser,
  - ledit premier récepteur (21, 21b, 21c) étant en outre configuré pour acquérir des signaux issus d'un objet connu, lesdits signaux acquis étant datés par la base de temps locale.

10. Système selon la revendication 9, dans lequel chaque station de réception (2a, 2b, 2c) comprend en outre un deuxième récepteur (22a, 22b, 2c) configuré pour acquérir des signaux issus d'un système de positionnement par satellites (5), ledit deuxième récepteur (22a, 22b, 22c, 22d) étant en outre configuré pour démoduler les signaux acquis par le deuxième récepteur pour en extraire une base de temps absolue afin de corriger la base de temps locale de chaque station de réception.

11. Système de localisation selon l'une des revendications 9 à 10, dans lequel la station de traitement est constituée par une des stations de réception.

12. Produit programme d'ordinateur comprenant des instructions de codes pour mettre en oeuvre un procédé de localisation selon l'une des revendications 1 à 8, lorsque celui-ci est exécuté par un ordinateur.


**Patentansprüche**

1. Verfahren zur Ortung eines Senders (3), das in einer Verarbeitungseinheit (7) einer Verarbeitungsstation (6) eines Ortungssystems (1) durchgeführt wird und die folgenden Schritte umfasst:

  - Empfang (REC) von Signalen, die durch geografisch entfernte Empfangsstationen (2a, 2b, 2c) erfasst (E1) wurden, wobei die Signale durch lokale Zeitbasen von jeder Empfangsstation (2a, 2b, 2c) datiert (E2) wurden und Signalen entsprechen, die von einem zu ortenden Sender (3) und mindestens einem bekannten Objekt (4) stammen;
  - Bestimmung (DET1), ausgehend von den datierten Signalen, der gemessenen TDOAs (TDOA_objet$_{ij}$$^{MES}$, TDOA_emetteur$_{ij}$$^{MES}$), die den zu ortenden Sender (3) und das Objekt betreffen; und/oder der gemessenen FDOAs (FDOA_objet$_{ij}$$^{MES}$, FDOA_emetteur$_{ij}$$^{MES}$), die den zu ortenden Sender (3) und das bekannte Objekt (4) betreffen;
  Bestimmung (DET2), ausgehend von bekannten Ephemeriden, die das bekannte Objekt betreffen, und den geografischen Positionen der Stationen; der theoretischen TDOAs (TDOA_objet$_{ij}$$^{TH}$), die das bekannte Objekt (4) betreffen; und/oder der theoretischen FDOAs (FDOA_objet_$_{ij}^{TH}$);
- Bestimmung (DET3), durch Differenz der gemessenen und theoretischen TDOAs und/oder FDOAs, die das bekannte Objekt betreffen, eines Fehlerrests, der die gemessenen TDOAs und/oder FDOAs verzerrt, derart dass jede Empfangsstation ihren lokalen Takt korrigiert oder die Verarbeitungsstation die Datierungen der Abschnitte der Signale korrigiert, die von jeder Empfangsstation (2a, 2b, 2c) stammen;
- Bestimmung der Ortung (LOC1) des Senders (3) unter Verwendung von TDOAs und/oder FDOAs, die gemessen werden, nachdem die Empfangsstationen ihre lokale Zeitbasis korrigiert haben oder die Verarbeitungsstation die Datierungen der Abschnitte der Signale korrigiert hat, die von jeder Empfangsstation (2a, 2b, 2c) stammen.

2. Verfahren nach Anspruch 1, das einen Schritt zur Bestimmung (DET4) eines Zuverlässigkeitsindikators der gemessenen Zeit- oder Frequenzabstände ausgehend von den gemessenen TDOAs und/oder FDOAs umfasst, die mehrere Objekte betreffen, wobei der Zuverlässigkeitsindikator es ermöglicht, zu bestimmen, ob die Ephemeriden des bekannten Objekts für die Korrektur des lokalen Takts nutzbar sind, und insbesondere zu bestimmen, ob das bekannte Objekt sich in einem Manöver befindet.

3. Verfahren nach einem der vorhergehenden Ansprüche, das einen Schritt zur Bestimmung (DET5) der Korrekturdaten der lokalen Zeitbasen ausgehend von den Resten, welche die gemessenen TDOAs und/oder FDOAs verzerren, und einen Schritt zur Sendung (TRANS) der Korrekturdaten der lokalen Zeitbasen, die derart bestimmt wurden, dass jede Empfangsstation ihren lokalen Takt korrigiert, an jede Empfangsstation (2a, 2b, 2c) umfasst.

4. Verfahren nach einem der Ansprüche 1 bis 2, das einen Schritt zur Bewahrung (CONS) der Korrekturdaten der bestimmten lokalen Zeitbasen umfasst, derart dass die Verarbeitungsstation die Datierungen der von jeder Empfangsstation (2a, 2b, 2c) empfangenen Signalabschnitte korrigiert.

5. Verfahren nach einem der vorhergehenden Ansprüche, das einen Schritt zur Bestimmung der Ortung (LOC2) des bekannten Objekts oder der bekannten Objekte (4) basierend auf durch die Stationen (2a, 2b, 2c) durchgeführten Messungen umfasst.

6. Verfahren nach Anspruch 4, in Kombination mit Anspruch 2, wobei die Ortung (LOC2) zum Bestimmen des Zuverlässigkeitsindikators genutzt wird.

7. Verfahren nach einem der Ansprüche 2 bis 4, wobei die Bestimmung (DET4) darin besteht, mehrere auf mehreren bekannten, aber unterschiedlichen Objekten gemessene TDOAs und/oder FDOAs zu vergleichen, um die Kohärenz der Reste untereinander zu überprüfen und die Gesamtheit der für die Korrektur des lokalen Takts nutzbaren Objekte zu bestimmen.

8. Verfahren nach einem der vorhergehenden Ansprüche, wobei die Empfangsstationen (2a, 2b, 2c) untereinander mittels eines Signals, das von einem Satellitenpositionierungssystem stammt, vorzugsweise auf intermittierende Weise, synchronisiert werden.

9. System (1) zur Ortung eines zu ortenden Senders (3), wobei das Ortungssystem (1) eine Verarbeitungsstation umfasst, die eine Verarbeitungseinheit (7), die dazu ausgestaltet ist, ein Verfahren nach einem der vorhergehenden Ansprüche durchzuführen, und mindestens zwei Empfangsstationen (2a, 2b, 2c) umfasst, die jeweils Folgendes umfassen:

   - einen lokalen Takt (h2a, h2b, h2c), der dazu ausgestaltet ist, eine lokale Zeitbasis (tlocal2a, tlocal2b, tlocal2c) zu liefern;
   - einen ersten Empfänger (21a, 21b, 21c), der dazu ausgestaltet ist, Signale zu erfassen, die von einem zu ortenden Objekt (3) stammen,
   - wobei der erste Empfänger (21, 21b, 21c) ferner dazu ausgestaltet ist, Signale zu erfassen, die von einem bekannten Objekt stammen, wobei die erfassten Signale durch die lokale Zeitbasis datiert sind.

10. System nach Anspruch 9, wobei jede Empfangsstation (2a, 2b, 2c) ferner einen zweiten Empfänger (22a, 22b, 2c) umfasst, der dazu ausgestaltet ist, Signale zu erfassen, die von einem Satellitenpositionierungssystem (5) stammen, wobei der zweite Empfänger (22a, 22b, 22c, 22d) ferner dazu ausgestaltet ist, die durch den zweiten Empfänger erfassten Signale zu demodulieren, um daraus eine Absolutzeit zu extrahieren, um die lokale Zeitbasis von jeder Empfangsstation zu korrigieren.

**11.** Ortungssystem nach einem der Ansprüche 9 bis 10, wobei die Verarbeitungsstation aus einer der Empfangsstationen besteht.

**12.** Computerprogrammprodukt, das Codeanweisungen zum Durchführen eines Ortungsverfahrens nach einem der Ansprüche 1 bis 8 umfasst, wenn dieses durch einen Computer ausgeführt wird.

**Claims**

**1.** Method for locating a transmitter (3), implemented in a processing unit (7) of a processing station (6) of a locating system (1) comprising the following steps:

- receiving (REC) signals acquired (E1) by geographically remote receiving stations (2a, 2b, 2c), said signals being dated (E2) by local time bases of each receiving station (2a, 2b, 2c) and corresponding to signals from a transmitter (3) to be located and from at least one known object (4);
- determining (DET1), on the basis of the dated signals, the measured TDOAs (TDOA_object$_{ij}$$^{MES}$, TDOA_transmitter$_{ij}$$^{MES}$) relating to the transmitter (3) to be located and to the object; and/or measured FDOAs (FDOA_object$_{ij}$$^{MES}$, FDOA_transmitter$_{ij}$$^{MES}$) relating to the transmitter (3) to be located and to the known object (4);

determining (DET2), on the basis of known ephemerides relating to the known object and of the geographical positions of the stations; theoretical TDOAs (TDOA_objet_$_{ij}$$^{TH}$) relating to the known object (4); and/or of theoretical FDOAs (FDOA_objet_$_{ij}$$^{TH}$);
- determining (DET3), by taking difference of the measured and theoretical TDOAs and/or FDOAs relating to the known object, a residual error affecting the measured TDOAs and/or FDOAs so that each receiving station corrects its local clock or the processing station corrects the timestamps of the portions of the signals coming from each receiving station (2a, 2b, 2c);
- determining the location (LOC1) of the transmitter (3) using measured TDOAs and/or FDOAs once the receiving stations have corrected their local time base or the processing station has corrected the timestamps of the portions of the signals coming from each receiving station (2a, 2b, 2c).

**2.** Method as claimed in claim 1, comprising a step (DET4) of determining, from measured TDOAs and/or FDOAs relating to several objects, an indicator of the reliability of said measured time or frequency differences, said reliability indicator making it possible to determine whether the ephemerides of the known object can be used for local clock correction and for, in particular, determining whether the known object is in the process of maneuvering.

**3.** Method according to one of the preceding claims, comprising a step of determining (DET5), from the residues affecting the measured TDOAs and/or FDOAs, a number of data of correction of the local time bases and a step of transmitting (TRANS) to each receiving station (2a, 2b, 2c) data of correction of the local time bases determined in such a way that each receiving station corrects its local clock.

**4.** Method according to one of claims 1 to 2, comprising a step of storing (CONS) the correction data of the local time bases determined so that the processing station corrects the timestamps of the portions of the signals received from each receiving station (2a, 2b, 2c).

**5.** Method according to one of the preceding claims, comprising a step of determining the location (LOC2) of the known object or objects (4) on the basis of measurements taken by the stations (2a, 2b, 2c).

**6.** A method according to claim 4 taken in combination with claim 2, wherein the location (LOC2) is used to determine the reliability indicator.

**7.** Method according to one of claims 2 to 4, wherein said determining (DET4) consists in comparing several TDOAs and/or FDOAs measured on several known but different objects to check the consistency of the residuals between them and determine the set of objects that can be used for local clock correction.

**8.** Method according to one of the preceding claims, wherein the receiving stations (2a, 2b, 2c) are synchronised with each other by means of a signal from a satellite positioning system, preferably intermittently.

**9.** System (1) for locating a transmitter (3) to be located, said location system (1) comprising a processing station comprising a processing unit (7) configured to implement a method according to one of the preceding claims, and at least two receiving stations (2a, 2b, 2c) each comprising:

- a local clock (h2a, h2b, h2c) configured to provide a local time base (tlocal2a, tlocal2b, tlocal2c);
- a first receiver (21a, 21b, 21c) configured to acquire signals from an object (3) to be located,
- said first receiver (21, 21b, 21c) also being configured to acquire signals from a known object, said acquired signals being dated by the local time base.

10. A system according to claim 9, wherein each receiving station (2a, 2b, 2c) further comprises a second receiver (22a, 22b, 2c) configured to acquire signals from a satellite positioning system (5), said second receiver (22a, 22b, 22c, 22d) being further configured to demodulate the signals acquired by the second receiver to extract therefrom an absolute time base in order to correct the local time base of each receiving station.

11. Location system according to one of claims 9 to 10, wherein the processing station is constituted by one of the receiving stations.

12. A computer program product comprising code instructions for implementing a location method according to one of claims 1 to 8, when executed by a computer.

## FIG. 1

# FIG. 2

# FIG. 3

@2x

@6

@6

E1

REC

E2

DET1

E3

DET2

E4

DET3

DET4

LOC1

LOC2

DET5

CONS

TRANS

**EP 4 081 821 B1**

## RÉFÉRENCES CITÉES DANS LA DESCRIPTION

**Documents brevets cités dans la description**

- EP 1701177 A2

- US 2009189851 A1